# EUROPÄISCHE PATENTSCHRIFT

(11) **EP 2 816 264 B1**
(45) Veröffentlichungstag und Bekanntmachung des Hinweises auf die Patenterteilung: **30.03.2016**
(21) Anmeldenummer: 14173013.5
(22) Anmeldetag: 18.06.2014
(51) Int. Cl.: F16K 1/22, F16K 27/02

(54) **Armatur zum Absperren oder Regeln eines Mediums**
Valve for shutting off or regulating a medium
Robinetterie d'arrêt ou de régulation d'un fluide

(30) Priorität: 18.06.2013 DE 102013010123
(43) Veröffentlichungstag der Anmeldung: 24.12.2014
(73) Patentinhaber: Erhard GmbH & Co. KG, 89522 Heidenheim (DE)
(72) Erfinder: Kampfl, Robert, 94522 Haidlfing (DE); Walzel, Jessika, 89522 Heidenheim (DE)
(74) Vertreter: Dr. Weitzel & Partner

(56) Entgegenhaltungen:
- EP-A2- 0 101 323
- DE-A1-102005 015 164
- US-A- 3 945 398
- US-A1- 2004 051 071

## Beschreibung

Die Erfindung betrifft eine Armatur zum Absperren oder Regeln eines Mediums, vor allem von Wasser, aber auch von anderen flüssigen oder gasförmigen Medien. Eine solche Armatur ist beispielsweise bekannt geworden aus EP 0 756 115 B1, EP-A-0 498 315, DE-A-2 605 189 oder US-A-2 847 181.

US 2004/051071 A1 sowie EP 0 101 323 A2 beschreiben jeweils eine Armatur gemäß dem Oberbegriff von Anspruch 1. DE 10 2005 015 164 A1 und US 3 945 398 A offenbaren jeweils einen Strömungskanal mit einer Klappenscheibe, die Verdickungen aufweist.

Eine solche Armatur weist ein Gehäuse auf, ferner einen kreisrunden, plattenförmigen Absperrkörper, die sogenannte Klappenscheibe. Die Klappenscheibe ist um eine Drehachse zwischen einer Offenstellung und einer Schließstellung verschwenkbar.

Armaturen der genannten Art werden vor allem im Bereich der Wasser-, Abwasser- und Gasversorgung sowie im Stahlwasserbau eingesetzt. Sie sind in vielen Fällen in erdverlegten Rohrleitungen eingebaut. Die Anforderungen an die Zuverlässigkeit sind hoch, insbesondere bei Medien wie Gas, aber auch bei Wasser, wobei die Verfügbarkeit der Versorgung gewährleistet werden muss. Die Armatur muss somit derart konstruiert sein, dass sie zuverlässig im Betrieb ist, dass aber auch alle Vorkehrungen gegen Störeinflüsse wie Korrosion, Verschmutzung und so weiter gegeben ist.

Armaturen der genannten Art sind Massenartikel, die einem harten Wettbewerb ausgesetzt sind, insbesondere durch Importe aus Niedriglohnländern. Deswegen ist die Konstruktion so zu gestalten, dass Herstellung und Montage besonders kostengünstig bei sicherer Funktionsfähigkeit sind.

Gerade die beiden letztgenannten Erfordernisse werden bei den bisher bekannten Armaturen nicht in vollem Maße erfüllt.

Ebenso weisen die sonst üblichen Verbindungen im Armaturenbau den Nachteil auf, dass sie einen starken Verschleiß der Verbindungselemente und eine Schwächung des Torsionswiderstandes der Welle durch die Kerbwirkung der eingefrästen Nut sowie konstruktive Nachteile durch ungünstige Dimensionierung der Welle haben.

Zwei ganz wichtige Anforderungen sind die strömungsgünstige Gestaltung der Klappenscheibe einerseits, und ihre Festigkeit andererseits. Die Klappenscheibe soll strömungsgünstig gestaltet sein, um einer Strömung einen möglichst geringen Widerstand zu bieten und damit einen geringen Strömungsverlust. Unter diesem Gesichtspunkt versucht man, die Scheibe so dünn wie möglich zu gestalten. Sie sollte mit anderen Worten einen guten Zeta-Wert aufweisen.

Die Klappenscheibe soll aber auch die notwendige Festigkeit haben, um in Schließstellung einem Differenzdruck standhalten zu können. Beide Anforderungen wirken somit unter konstruktiven Gesichtspunkten einander entgegen.

Der Erfindung liegt die Aufgabe zugrunde, eine Armatur gemäß dem Oberbegriff von Anspruch 1, insbesondere die zugehörende Klappenscheibe, derart zu gestalten, dass sie in Offenstellung die Strömung möglichst wenig beeinträchtigt und somit einen geringen Strömungsverlust erzeugt, dass sie aber auch eine hohe Festigkeit aufweist.

Diese Aufgabe wird mit einer Absperrarmatur gemäß Anspruch 1 gelöst.

Der Kerngedanke der Erfindung besteht in den folgenden Merkmalen:
- in einem Axialschnitt und bei geschlossener Klappenscheibe gesehen verringert sich die Verdickung der Klappenscheibe zu deren Umfangsbereich hin.
- die Kontur der Laibung des Gehäuses folgt im genannten Bereich der Kontur der Klappenscheibe im Sinne einer Verengung des Strömungskanales.

Hierdurch verlaufen die Konturen des vom Gehäuse gebildeten Strömungskanales einerseits und der Klappenscheibe andererseits über einen gewissen axialen Abschnitt parallel zueinander. Dies bedeutet, dass die für die Strömung verfügbare Querschnittsfläche über den genannten Axialabschnitt mehr oder minder konstant bleibt. Dies ist für den Zeta-Wert optimal. Die Strömung wird nur wenig beeinträchtigt, sodass kaum Strömungsverluste auftreten.

Durch die genannte Dickenzunahme kann die Klappenscheibe in Schließstellung natürlich höheren Kräften standhalten, als konventionelle Klappenscheiben.

Es werden somit gleichzeitig die beiden Vorteile erzielt:
- geringere Strömungsverluste der Armatur;
- höhere Festigkeit.

Bisher war dies nicht möglich. Eine Verdickung der Klappenscheibe führte zwar zu höherer Festigkeit, aber gleichzeitig zu einer stärkeren Störung der Strömung, und umgekehrt.

Die Erfindung ist anhand der Zeichnung näher erläutert. Darin ist im Einzelnen folgendes dargestellt:
- Figur 1: zeigt eine Armatur in einem zur Strömungsrichtung senkrechten Sch n itt.
- Figur 2: zeigt die Klappenscheibe in Draufsicht.
- Figur 3: zeigt die Klappenscheibe gemäß Figur 2 in einer Seitenansicht in Blickrichtung D auf den Gegenstand von Figur 2.
- Figur 4: zeigt die Klappenscheibe gemäß Figur 2 in einer Schnittansicht A-A.
- Figur 5: zeigt die Klappenscheibe gemäß Figur 2 in einer Schnittansicht C-C.
- Figur 6: veranschaulicht eine Armatur des Stands der Technik in sehr schematischer Darstellung.
- Figur 7: veranschaulicht das Prinzip der Erfindung in schematischer Darstellung.
- Figur 8: zeigt ein Absperrventil, das nicht Teil der Erfindung ist, in einem Axialschnitt mit geöffneter Klappenscheibe.

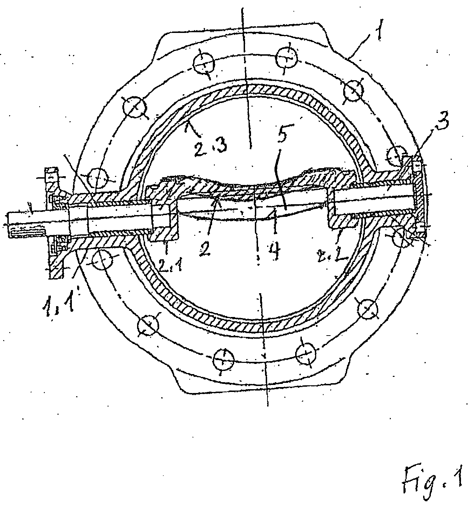

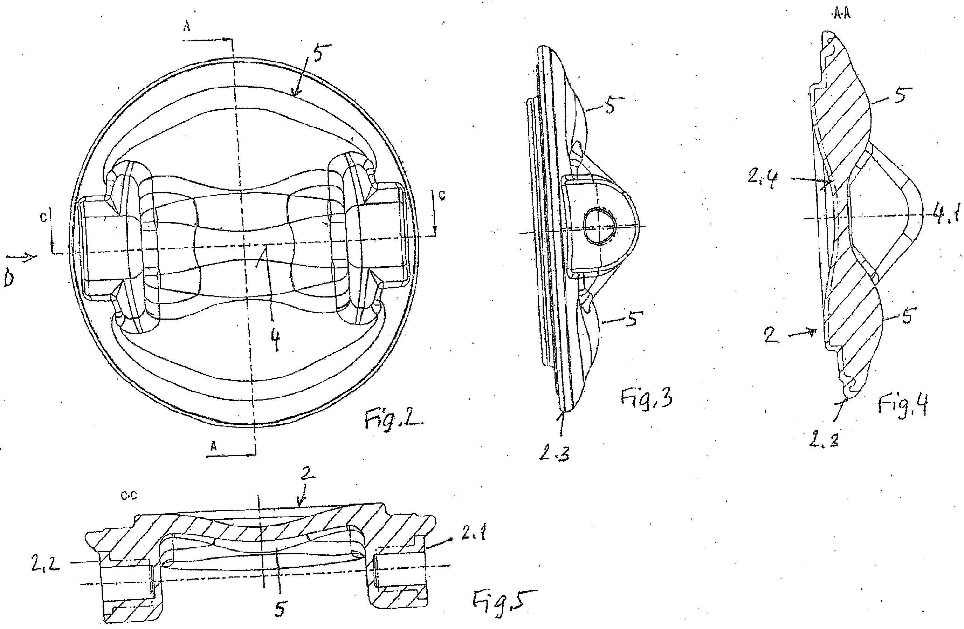

Die in Figur 1 gezeigte Armatur weist ein Gehäuse 1 auf, ferner eine Klappenscheibe 2. Die Klappenscheibe 2 ist kreisförmig. Sie weist zwei einander gegenüberliegende Naben 2.1, 2.2 auf. Ein Antriebszapfen 3 ist durch einen Lagerstutzen 1.1 des Gehäuses 1 hindurchgeführt. Die Klappenscheibe 2 weist einen Verdickung 5 auf, die genauer aus den Figuren 2 bis 5 erkennbar ist.

Figur 2 zeigt wiederum die Klappenscheibe 2 mit den beiden Naben 2.1, 2.2, die koaxial zur Drehachse 4 der Klappenscheibe 2 verlaufen. Im Umfangsbereich erkennt man zwei Verdickungen 5, 5. Die Umfangslinie verläuft wenigstens annähernd parallel zur Umfangslinie 2.3 der Klappenscheibe.

Die Figuren 3 und 4 zeigen besonders gut den Verlauf der Verdickungen 5, 5. Aus Figur 4 erkennt man, dass die Verdickungen 5, 5 zwischen der Drehachse 4 und der Umfangslinie 2.3 der Plattenscheibe 2 von variabler Dicke sind. In Nähe der Drehachse 4 sowie in Nähe der Umfangslinie 2.3 ist deren Dicke verringert. Figur 4 lässt erkennen, dass der Körper der Klappenscheibe 2 auf der den Verdickungen 5, 5 gegenüberliegenden Fläche konkav ist. Siehe die konkave Kontur 2.4.

Figur 5 zeigt, dass die Drehachse 4 der Plattenscheibe 2 gegenüber der Hauptmasse der Klappenscheibe 2 versetzt sind.

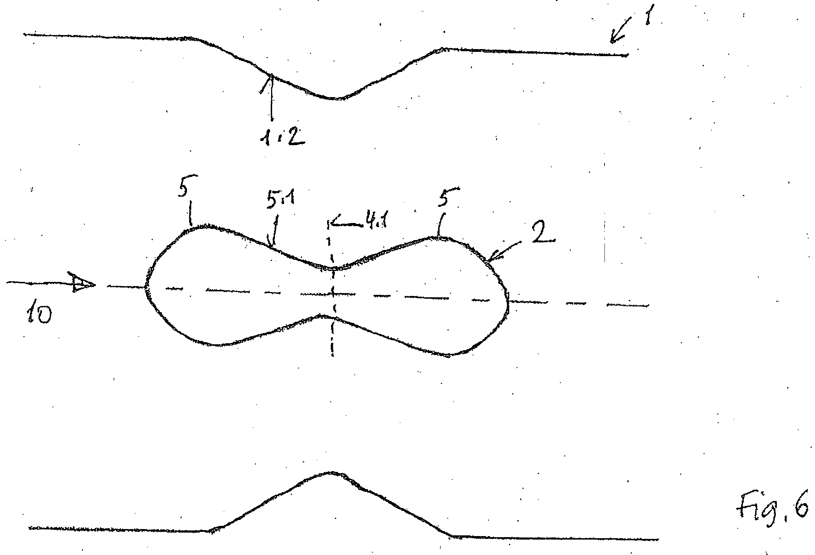

Die schematische Darstellung in Figur 6 zeigt den Strömungskanal 10, der von der Rohrleitung 1 (Gehäuse) umschlossen ist. Der Strömungskanal wird im Bereich der Klappenscheibe 2 begrenzt durch die Kontur 5.1 der Klappenscheibe 2 sowie die Kontur 1.2 der Laibung des Gehäuses 1. Die beiden Konturen 1.2 und 5.1 verlaufen über einen axialen Abschnitt einer gewissen Länge parallel zueinander. Die Verdickungen 5, 5 nehmen in axialer Richtung nach beiden Seiten der Ebene 4.1 der Drehachse zu, und zwar gleichmäßig. Dies muss jedoch nicht so sein. Auch eine von der Symmetrie abweichende Kontur ist denkbar. Man könnte sagen, dass die Klappenscheibe 2 in der Darstellung gemäß Figur 6 Knochenform hat.

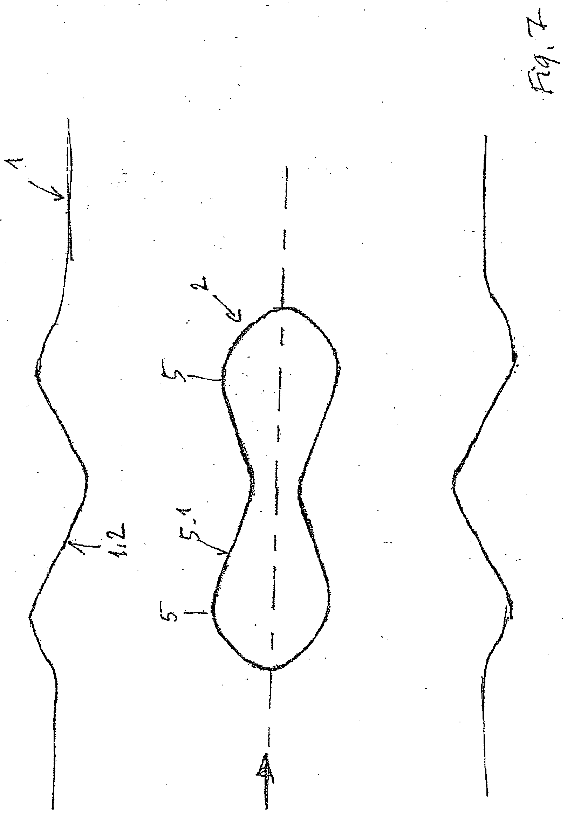

Bei der Darstellung gemäß der Figur 7 ist der Erfinder noch einen Schritt weiter gegangen. Er hat die Kontur 1.2 der Laibung des Gehäuses 1 auch im Bereich der Enden der Kontur 5.1 der beiden Verdickungen 5 angepasst. Durch diese Annäherung der Konturen 1.2 und 5.1 wird eine weitere Verringerung von Strömungsverlusten erzielt.

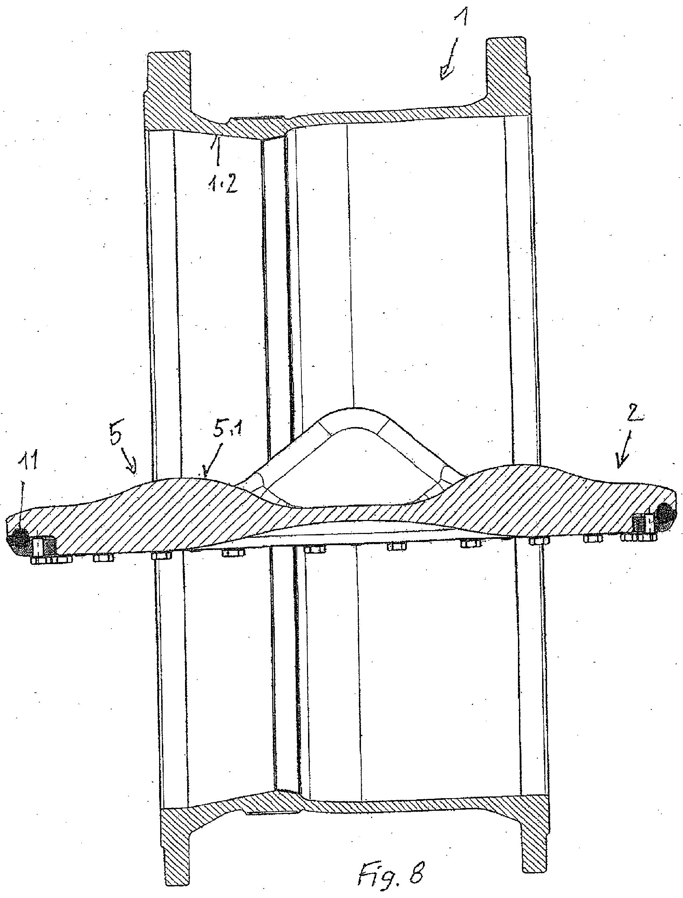

In Figur 8 sieht man nochmals eine Ausführungsform, die nicht Teil der Erfindung ist, eines Klappenventils mit geöffneter Klappenscheibe 2. Man beachte die Kontur 1.2 der Laibung des Gehäuses 1 sowie die Kontur 5.1 der Verdickung 5. Im Umfang der Klappenscheibe 2 ist ein O-Ring 11 eingelassen, der in Schließstellung an der Laibung des Gehäuses 1 anliegt.

### Bezugszeichen liste

- 1: Gehäuse
- 1.1: Lagerstutzen
- 1.2: Kontur der Laibung des Gehäuses
- 2: Klappenscheibe
- 2.1: Nabe
- 2.2: Nabe
- 2.3: Umfangslinie
- 2.4: konkave Fläche der Klappenscheibe
- 3: Antriebszapfen
- 4: Drehachse
- 4.1: Ebene der Drehachse
- 5: Verdickung
- 5.1: Kontur der Verdickung
- 10: Strömungskanal
- 11: O-Ring

## Patentansprüche

1. Armatur zum Absperren oder Regeln eines fließfähigen Mediums, umfassend die folgenden Merkmale:
1.1 ein Gehäuse (1), das einen Strömungskanal (10) umschließt;
1.2 eine kreisrunde Klappenscheibe (2), die um eine Drehachse (4) zwischen der Offenstellung und der Schließstellung verschwenkbar ist;
1.3 in einem Axialschnitt gesehen erweitert sich der Querschnitt des Strömungskanales, ausgehend von einer Ebene (4.1) der Drehachse (4) der Klappenscheibe (2), entlang der Strömung zum Rande der Klappenscheibe (2), zumindest auf deren angeströmter Seite;
1.4 in einem Axialschnitt gesehen sowie bei Schließstellung der Klappenscheibe (2) nimmt deren Dicke zu, ausgehend von der Ebene (4.1) der Drehachse (4), der Klappenscheibe (2), zumindest auf deren angeströmter Seite;
**gekennzeichnet durch** die folgenden Merkmale:
1.5 in einem Axialschnitt und bei geschlossener Klappenscheibe (2) gesehen verringert sich die Verdickung (5, 5) der Klappenscheibe zu deren Umfangsbereich (2.3) hin;
1.6 eine Kontur (1.2) der Laibung des Gehäuses (1) folgt im genannten Bereich einer Kontur (5.1) der Klappenscheibe (2) im Sinne einer Verengung des Strömungskanales.

2. Armatur nach Anspruch 1, **dadurch gekennzeichnet, dass** nur auf einer Seite der Klappenscheibe (2) Verdickungen (5) vorgesehen sind.

3. Armatur nach Anspruch 1 oder 2, **dadurch gekennzeichnet, dass** die Konturen des Strömungskanales, gebildet vom Gehäuse (1) und von der Klappenscheibe (2) über einen gewissen axialen Abschnitt parallel zueinander verlaufen, sodass die für die Strömung verfügbare Querschnittsfläche über den genannten Axialabschnitt konstant bleibt.

## Claims

1. A fitting for shutting off or regulating a flowable medium, comprising the following features:
1.1 a housing (1) enclosing a flow channel (10);
1.2 a circular flap disc (2) which is pivotable about an axis of rotation (4) between the open position and the closed position;
1.3 viewed in an axial section, the cross-section of the flow channel widens along the flow to the edge of the flap disc (2), at least on its side being flowed against, starting from a plane (4.1) of the axis of rotation (4) of the flap disc (2);
1.4 viewed in an axial section and in the closed position of the flap disc (2), its thickness increases starting from the plane (4.1) of the axis of rotation (4) of the flap disc (2), at least on its side being flowed against;
**characterized by** the following features:
1.5 viewed in an axial section and when the flap disc (2) is closed, the thickening (5, 5) of the flap disc decreases toward its peripheral section (2.3);
1.6 a contour (1.2) of the soffit of the housing (1) in said region follows a contour (5.1) of the flap disc (2) in the sense of a tapering of the flow channel.

2. The fitting according to claim 1, **characterized in that** thickenings (5) are provided only at one side of the flap disc (2).

3. The fitting according to claim 1 or 2, **characterized in that** the contours of the flow channel, formed by the housing (1) and the flap disc (2), run parallel to one another over a certain axial section so that the cross-sectional area available for the flow remains constant over said axial section.

## Revendications

1. Robinetterie d'arrêt ou de régulation d'un fluide comprenant les caractéristiques suivantes :
1.1 un logement (1) qui enveloppe un canal d'écoulement (10) ;
1.2 un circulaire papillon de clapet (2), qui est pivotable autour d'un axe de rotation (4) entra la position ouverte et la position fermée ;
1.3 d'une vue d'un coup axiale, la section du canal d'écoulement s'élargit, à partir d'un plan (4.1) de l'axe de rotation (4) du papillon de clapet (2), suivant la direction d'écoulement vers le bord du papillon de clapet (2) d'au moins sur le côté écoulé de celui-ci ;
1.4 d'une vue d'une coupe axiale ainsi qu'en position fermée du papillon de clapet (2) ; son épaisseur augmente, à partir du plan (4.1) de l'axe de rotation (4) du papillon de clapet (2) d'au moins en son côté écoulé de celui-ci;
**caractérisé en ce que** :
1.5 d'une vue d'une coupe axiale et lorsque le papillon de clapet (2) est fermé, l'épaississement (5,5) du papillon de clapet se réduit vers sa région périphérique (2.3),
1.6 un contour (1.2) d'embrasure du logement (1) suit un contour (5.1) du papillon de clapet (2), dans la zone mentionnée, dans le sens d'un rétrécissement du canal d'écoulement.

2. Robinetterie selon la revendication 1, **caractérisée en ce que** des épaississements (5) sont envisagés que sur un côté du papillon de clapet (2).

3. Robinetterie selon la revendication 1 ou 2, **caractérisée en ce que** les contours du canal d'écoulement, formées par le logement (1) et par le papillon de clapet (2), s'étendant parallèlement l'une à l'autre pour une certaine partie axiale, de telle manière que la surface de section disponible pour l'écoulement reste constante dans ladite section axiale.
